## Europäisches Patentamt

## European Patent Office

## Office européen des brevets

(19)

(11) Veröffentlichungsnummer: **0 293 686**
**B1**

(12)

# EUROPÄISCHE PATENTSCHRIFT

(45) Veröffentlichungstag der Patentschrift: **23.01.91**

(21) Anmeldenummer: **88108094.9**

(22) Anmeldetag: **20.05.88**

(60) Teilanmeldung **90105784.4** eingereicht am **20/05/89.**

(51) Int. Cl.⁵: **E 21 F 15/00,** E 21 D 23/04, B 09 B 1/00

(54) Verfahren zum Verfüllen von bergmännisch hergestellten Hohlräumen und Vorrichtung zur Durchführung eines entsprechenden Verfahrens.

(30) Priorität: **03.06.87 DE 3718512**
**16.06.87 DE 3720080**

(43) Veröffentlichungstag der Anmeldung:
**07.12.88 Patentblatt 88/49**

(45) Bekanntmachung des Hinweises auf die Patenterteilung:
**23.01.91 Patentblatt 91/04**

(84) Benannte Vertragsstaaten:
**BE DE FR GB**

(56) Entgegenhaltungen:
**DE-A-1 951 117**
**DE-B-1 114 155**
**DE-B-2 549 985**
**GB-A-1 514 751**

**ERZMETALL, Band 37, Nr. 2, 1984, Seiten 84-89, Verlag Chemie GmbH, Weinheim, DE; J. LANGE: "Industrielle Abfallstoffe als Versatzkomponente, eine zusätzliche Erlösquelle für Bergwerke"**

(73) Patentinhaber: **DPU DEUTSCHE PROJEKT UNION GMBH**
**Huyssenallee 58 - 64**
**D-4300 Essen 1 (DE)**

(72) Erfinder: **Schick, Gilbert Dietrich, Dipl.-Ing.**
**An Sichelscheid 7**
**D-5120 Herzogenrath (DE)**

(74) Vertreter: **von Rohr, Hans Wilhelm, Dipl.-Phys. et al**
**Patentanwälte Gesthuysen & von Rohr**
**Huyssenallee 15 Postfach 10 13 33**
**D-4300 Essen 1 (DE)**

EP 0 293 686 B1

**Beschreibung**

Die Erfindung betrifft ein Verfahren zum Verfüllen von bergmännisch hergestellten Hohlräumen, insbesondere im Steinkohlenbergbau, nach dem Oberbegriff von Anspruch 1.

Verfahren zum Verfüllen von Hohlräumen der in Rede stehenden Art sind umfangreich bekannt (als Übersicht vgl. Knissel, Glückauf 120 (1984), Seiten 1599 bis 1604). Bei diesem Verfahren erfolgt das Verfüllen in der Regel in einer Arbeitsrichtung schrittweise, so daß sich einzelne, sich über die Breite des Verfüllungsbereichs erstreckende Streifen von Verfüllungsmaterial ergeben. Es hat sich gezeigt, daß die bekannten Verfahren nicht dazu geeignet sind, Bergschäden wirksam zu vermeiden.

Im übrigen versucht man zusätzlich Erlösquellen dadurch zu erschließen, daß man dem Verfüllungsmaterial Rückstands- und Abfallstoffe, ggf. nach vorheriger Behandlung, insbesondere der Schadstoffe, beimischt und so die zu verfüllenden Hohlräume gleichzeitig als Deponien für Rückstands- und Abfallstoffe nutzt (vgl. Lange in Erzmetall 37 (1984), Seiten 84 bis 89). Von diesem Verfahren geht die Erfindung aus. Insbesondere dann, wenn man dem Verfüllungsmaterial Rückstands- und Abfallstoffe beimischt, kommt es auf eine besonders langzeitstabile Struktur der mit Verfüllungsmaterial verfüllten Hohlräume an. Dabei sind Umweltschutzgesichtspunkte, insbesondere die Gefahr der Auswaschung der Rückstands- und Abfallstoffe von herausragender Bedeutung.

Der Erfindung liegt nun die Aufgabe zugrunde, das bekannte zuvor erläuterte Verfahren so auszugestalten und weiterzubilden, daß das Verfüllungsmaterial unter Berücksichtigung der besonderen Randbedingungen bei Einbringung von Rückstands- und Abfallstoffen wirksam und langzeitstabil in bergmännisch hergestellte Hohlräume eingebracht werden kann.

Das beanspruchte Verfahren ist durch die Merkmale des kennzeichnenden Teils des Anspruchs 1 beschrieben.

Wesentlich ist zunächst, daß in Querrichtung eindeutig begrenzte Abschnitte entstehen, ohne daß im Ergebnis die durchlaufende, streifenartige Füllung des bergmännisch hergestellten Hohlraums aufgegeben würde. Die volumenmäßig sehr begrenzten Abschnitte verfestigen besonders schnell und ergeben schnell die erwünschte hohe Tragfähigkeit. Gleichzeitig geben die voneinander getrennten Abschnitte die Möglichkeit, im Wechsel zum Teil mit Verfüllungsmaterial mit Rückstands- und Abfallstoffen und zum Teil mit Verfüllungsmaterial ohne Rückstands- und Abfallstoffe zu verfüllen. Die Abschnitte aus Verfüllungsmaterial mit Rückstands- und Abfallstoffen, vorzugsweise industriellen Rückstands- und Abfallstoffen mit eingelagerten Schadstoffen, können durch die Abschnitte aus Verfüllungsmaterial ohne Rückstands- und Abfallstoffe gegenüber der Umgebung auf diese Weise isoliert werden, so daß insbesondere Auswaschungen der Rückstands- und Abfallstoffe systematisch unterbunden werden können. Durch die zweckmäßige Wahl des Verfüllungsmaterials der Abschnitte ohne Rückstands- und Abfallstoffe läßt sich der Gas- und Wasserzutritt aus dem Gebirge in die Abschnitte mit Rückstands- und Abfallstoffen erheblich vermindern oder gar völlig ausschließen. Dabei kann das Verfüllungsmaterial der Abschnitte mit Rückstands- und Abfallstoffen dasselbe Verfüllungsmaterial oder ein anderes bzw. modifiziertes Verfüllungsmaterial sein.

Ganz besonders zweckmäßig ist das erfindungsgemäße Verfahren gemäß Anspruch 2 durchführbar.

Üblicherweise wird man ständerartige Abschnitte in Querrichtung vorsehen, die sich beispielsweise im Streb zwischen Hangendem und Liegendem erstrecken. An sich ist es aber auch möglich, daß das Verfüllen in einer weiteren zur Arbeitsrichtung und zur Querrichtung etwa senkrechten Richtung — Höhenrichtung — ebenfalls, vorzugsweise ebenfalls schrittweise, in einzelnen Abschnitten erfolgt. Diese Technik empfiehlt sich insbesondere dann, wenn aus Umweltschutzgesichtspunkten gewisse Abschnitte in allen Richtungen isolierbar sein sollen.

Die Anordnung der Abschnitte kann symmetrisch oder asymmetrisch erfolgen, es empfiehlt sich insgesamt aber, daß das Verfüllen mittels schachbrettartig angeordneter Abschnitte erfolgt. Das ist primär flächig, also in der von Arbeitsrichtung und Querrichtung aufgespannten Ebene zu verstehen, gilt aber bei Ausbildung von einzelnen, separierten Abschnitten auch in Höhenrichtung ebenso im räumlichen Sinne.

Das erfindungsgemäße Verfahren eignet sich in besonderem Maße für bergmännisch hergestellte Hohlräume in bergmännischen Gewinnungsbetrieben, ist aber auch im Tunnelbau, bei der Unterfahrung von Deponien usw. einsetzbar. Insbesondere bei derschachbrettartigen Anordnung der Abschnitte unter Vermeidung von Flächenberührung und Kantenberührung zwischen Abschnitten mit Rückstands- und Abfallstoffen läßt sich für die Einbindung der Rückstands- und Abfallstoffe eine derartige Qualität realisieren, daß man von einer Endlagerungsqualität sprechen kann.

Im übrigen gilt, daß Rückstands- und Abfallstoffe dem Verfüllungsmaterial nicht nur beigemischt werden können, sondern daß bei entsprechender Vorbereitung der Rückstands- und Abfallstoffe auch eine Beigabe zum Verfüllungsmaterial, beispielsweise in einem patronenartigen Behälter od. dgl. möglich ist. Der Begriff "beigemischt" ist also in einem umfassenden, auch eine punktuelle Beigabe einschließenden Sinne zu verstehen.

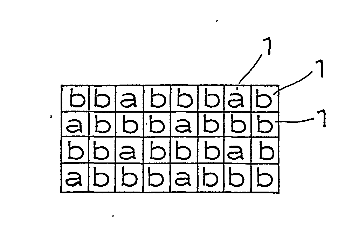

Im übrigen werden bevorzugte Ausgestaltungen und Weiterbildungen der Erfindung in Verbindung mit der Erläuterung von Ausführungsbeispielen anhand der Zeichnung näher erläutert. In der Zeichnung zeigt die einzige Figur in schematischer Darstellung ein Ausführungsbeispiel eines nach dem erfindungsgemäßen Verfahren verfüllten, bergmännisch hergestellten Hohlraums.

Der schematisch dargestellte, verfüllte Hohlraum in einem bergmännischen Gewinnungsbetrieb zeichnet sich im Rahmen der Lehre der Erfindung dadurch aus, daß das Verfüllen insgesamt mittels schachbrettartig angeordneter Abschnitte 1 erfolgt. Dabei sind hier ein Teil der Abschnitte 1a mit Verfüllungsmaterial mit Rückstands- und Abfallstoffen, insbesondere mit eingelagerten Schadstoffen, und der restliche Teil der Abschnitte 1b mit Verfüllungsmaterial ohne Rückstands- und Abfallstoffe verfüllt. Jeder Abschnitt 1a ist allseitig von Abschnitten 1b umgeben, und zwar hier sogar so, daß zwischen Abschnitten 1a weder eine Flächenberührung noch eine Kantenberührung vorliegt. Dadurch sind die Rückstands- und Abfallstoffe in Abschnitten 1a deponiert, die durch Abschnitte 1b allseits gegen Umwelteinflüsse geschützt sind, insbesondere einer Auswaschung praktisch nicht mehr unterliegen.

Das erfindungsgemäße Verfahren läßt sich z.B. mit einer Vorrichtung gemäß der DE-B-2 549 486, insbesondere aber mit einer Vorrichtung entsprechend der Teilanmeldung aus vorliegender Patentanmeldung ausführen.

## Patentansprüche

1. Verfahren zum Verfüllen von bergmännisch hergestellten Hohlräumen, insbesondere im Steinkohlenbergbau, mit einem Verfüllungsmaterial mit im Endzustand dichter Gefügestruktur und hoher, vorzugsweise schnell eintretender Verfestigung, wobei das Verfüllen sowohl in einer Arbeitsrichtung als auch in einer Richtung etwa quer zur Arbeitsrichtung - Querrichtung - schrittweise erfolgt und wobei dem Verfüllungsmaterial Rückstands- und Abfallstoffe, insbesondere mit eingelagerten Schadstoffen, beigemischt werden und die Verfüllung in einzelnen Abschnitten erfolgt, dadurch gekennzeichnet, daß im Wechsel Abschnitte mit Verfüllungsmaterial mit Rückstands- und Abfallstoffen und Abschnitte mit Verfüllungsmaterial ohne Rückstands- und Abfallstoffe verfüllt werden.

2. Verfahren nach Anspruch 1, dadurch gekennzeichnet, daß jeder Abschnitt mit Verfüllungsmaterial mit Rückstands- und Abfallstoffen durch Abschnitte mit Verfüllungsmaterial ohne Rückstands- und Abfallstoffe umgeben wird und, vorzugsweise, daß das Verfüllen so erfolgt, daß zwischen Versatzabschnitten mit Rückstands- und Abfallstoffen weder eine Flächenberührung noch eine Kantenberührung vorliegt.

3. Verfahren nach Anspruch 1 oder 2, dadurch gekennzeichnet, daß das Verfüllen in einer weiteren zur Arbeitsrichtung und zur Querrichtung etwa senkrechten Richtung — Höhenrichtung — ebenfalls, vorzugsweise ebenfalls schrittweise, in einzelnen Abschnitten erfolgt.

4. Verfahren nach einem der Ansprüche 1 bis 3, dadurch gekennzeichnet, daß das Verfüllen insgesamt mittels schachbrettartig angeordneter Abschnitte erfolgt.

## Revendications

1. Procédé destiné au remplissage de galeries de mines, en particulier, dans le domaine de l'exploitation de mines de charbon, à l'aide d'une matière de remplissage dotée, à l'état final, d'une structure à joints plus étanches et d'une consolidation plus élevée intervenant, de préférence, rapidement, par lequel on procède au remplissage en pas à pas, aussi bien dans une direction de travail que dans une direction approximativement perpendiculaire à la direction de travail — direction transversale —, et dans lequel on mélange, à la matière de remplissage, des matières résiduaires et de rejet, qui contiennent, en particulier, des produits nocifs et dans lequel le remplissage s'effectue par sections individuelles, caractérisé en ce qu'on remplit en alternance, des sections avec de la matière de remplissage dans laquelle sont incorporées des matières résiduaires et de rejet et des sections avec de la matière de remplissage exempte de matières résiduaires et de rejet.

2. Procédé selon la revendication 1, caractérisé en ce qu'on entoure chaque section remplie de matière de remplissage dans laquelle sont incorporées des matières résiduaires et de rejet, de sections contenant de la matière de remplissage exempte de matières résiduaires et de rejet et, de préférence, en ce qu'on procède au remplissage de telle sorte qu'aucun contact superficiel ou marginal n'existe entre des sections de remblayage contenant des matières résiduaires ou de rejet.

3. Procédé selon la revendication 1 ou 2, caractérisé en ce qu'on procède au remplissage dans une autre direction approximativement perpendiculaire à la direction de travail et la direction transversale — direction ascendante —, également en sections individuelles, de préférence, également en pas à pas.

4. Procédé selon l'une quelconque des revendications 1 à 3, caractérisé en ce qu'on procède globalement au remplissage au moyen de sections agencées en échiquier.

## Claims

1. A process for filling-in excavations produced by mining, particularly in hard coal mining, with a filling material having a dense structure in its final state and a high consolidation that preferably takes place rapidly, in which the filling-in takes place step by step both in a working direction and in a direction approximately transverse to the working direction — the transverse direction — and in which residual and waste materials, particularly embedded harmful substances, are mixed with the filling material and the filling-in takes place in individual sectors, characterized in that alternate sectors are filled-in with filling material containing residual and waste substances, and with filling material without residual and waste substances.

2. A process according to claim 1, characterized in that each sector containing filling material with residual and waste substances is surrounded by sectors containing filling material without residual and waste substances and, preferably, that the filling so takes place that backfilling sectors containing residual and waste substances do not contact one another either at their surfaces or at their corners.

3. A process according to claim 1 or 2, characterized in that the filling takes place in a further direction approximately at right angles to the working direction and the transverse direction — namely in the direction of height — similarly in individual sectors and preferably similarly step by step.

4. A process according to claims 1 to 3, characterized in that the filling-in as a whole takes place by means of sectors arranged in chess-board formation.